# EUROPEAN PATENT APPLICATION

(11) **EP 1 524 510 A1**
(43) Date of publication of application: **20.04.2005**
(21) Application number: 04256172.0
(22) Date of filing: 06.10.2004
(51) Int. Cl.: G01L 3/10, B62D 6/10, G01L 5/22

(54) **Tandem rotation detector**

(30) Priority: 17.10.2003 JP 2003357360
(71) Applicant: MINEBEA CO., LTD., Kitasaku-gun, Nagano-ken (JP)
(72) Inventor: Matsuura, Mutsumi c/o Minebea Co., Ltd, Ota-ku, Tokyo (JP)
(74) Representative: McCallum, Graeme David

(57) **Abstract**

A tandem rotation detector capable of reducing the influence of leakage flux between rotation angle detection mechanisms so that high-precision detection can be always done under normal magnetic field environments includes a first rotation detection mechanism 2A configured to generate a magnetic flux through a coil 11A of a first outer core 10A mounted inside a cylindrical housing 1 for detecting the rotation angle of a rotary shaft 4A arranged in the central portion of the housing 1, and a second rotation detection mechanism 2B, placed side by side with the first rotation detection mechanism 2A, configured to generate a magnetic flux through a coil 11B of a second outer core 10B mounted inside the housing 1 for detecting the rotation angle of a rotary shaft 4B arranged in the central portion of the housing in series with the rotary shaft 4A, in which the housing 1 is formed from a nonmagnetic material.

## Description

The present invention relates to a tandem rotation detector capable of reducing the influence of leakage flux between rotation angle detection mechanisms so that high-precision detection can be always realized.

### Description of the Prior Art

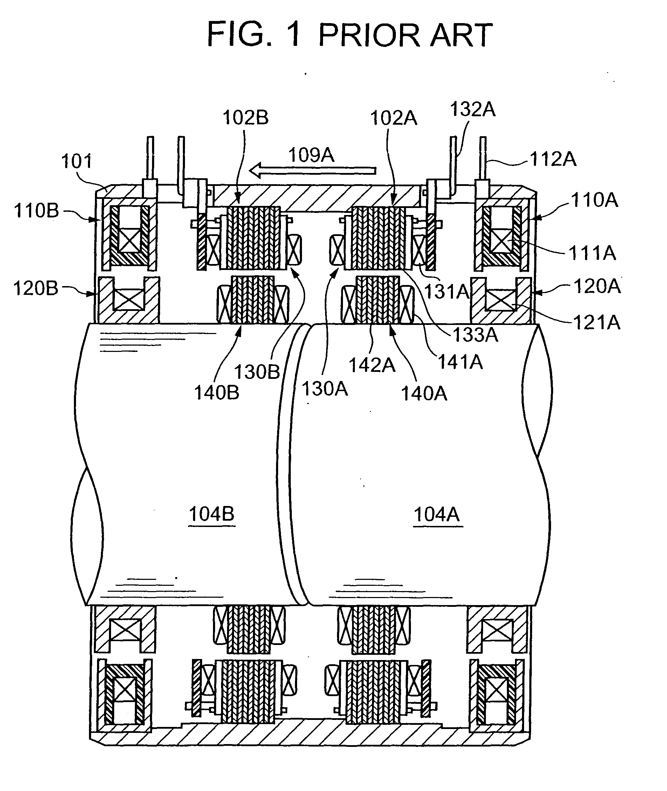

Fig. 1 shows a sectional side view of a conventional tandem rotation detector.

As shown in Fig. 1, this kind of tandem rotation detector (for example, see Japanese Patent Application Laid -Open No. 2003-098019) is used to detect the rotation angles of rotary shafts. The rotation detector has a rotary shaft 104A and a rotary shaft 104B arranged in series in a central portion of a cylindrical housing 101. A first rotation angle detection mechanism 102A for detecting the rotation angle of the rotary shaft 104A, and a second rotation angle detection mechanism 102B for detecting the rotation angle of the rotary shaft 104B are arranged inside the housing 101. In the first rotation angle detection mechanism 102A, a first outer core 110A and a first stator core 130A are arranged in parallel on the inner surface of the housing 101. A first inner core 120A is mounted on the rotary shaft 104A so as to face the first outer core 110A, and a first rotor core 140A is mounted on the rotary shaft 104A so as to face the first stator core 130A.

A coil 111A is wound on the first outer core 110A with terminals connected to two outer core pins 112A placed side by side in the horizontal direction, respectively, through which an AC voltage is applied. A coil 121A is wound on the first inner core 120A.

Coils 131A are wound on a plurality of annular stator core teeth 133A provided around the first stator core 130A. The coils 131A have four terminals connected to each other in the X direction (horizontal direction) and the Y direction (vertical direction) respectively, and the four terminals of the coils 131A are connected to four stator core pins 132A which are placed side by side in the horizontal direction, respectively. Coils 141A are wound on a plurality of rotor core teeth 142A provided on the circumference of the rotary shaft 104A.

In such a structure, when an AC voltage is applied to the coil 111A of the first outer core 110A, a voltage corresponding to the rotation angle of the rotation shaft 104A is induced into the first stator core 130A through the first inner core 120A and the first rotor core 140A in the first rotation angle detection mechanism 102A, thereby detecting the rotation angle of the rotary shaft 104A.

Like the first rotation angle detection mechanism 102A, the second rotation angle detection mechanism 102B includes a second outer core 110B, a second inner core 120B, a second stator core 130B, and a second rotor core 140B to detect the rotation angle of the rotary shaft 104B. Then, based on the detected rotation angles of the rotary shafts 104A and 104B, a difference between both rotation angles can be detected.

The conventional tandem rotation detector, however, has the following problems.

As mentioned above, the conventional tandem rotation detector can detect both the rotation angles of the rotary shafts 104A and 104B. The housing 101 is formed from a magnetic material for use in strong magnetic field environments. Therefore, under normal magnetic field environments, any amount of leakage flux 109A could be produced in a direction along the housing from the first rotation angle detection mechanism 102A to the second rotation angle detection mechanism 102B as shown by an arrow so that it might affect the performance of the second rotation angle detection mechanism 102B in detection of the rotation angle of the rotary shaft 104B. Likewise, as not shown here, the leakage flux could also be produced in a direction along the housing from the second rotation angle detection mechanism 102B to the first rotation angle detection mechanism 102A so that it might also affect the performance of the first rotation angle detection mechanism 102A in detection of the rotation angle of the rotary shaft 104A. To prevent the influence of such a leakage flux, a shielding plate can be provided between the first rotation angle detection mechanism 102A and the second rotation angle detection mechanism 102B, but only the shielding plate is not enough to prevent the influence of leakage flux. Even in this case, the influence of leakage flux remains to be solved.

The present invention has been made in view of the above problems, and it is an object thereof to provide a tandem rotation detector capable of reducing the influence of leakage flux between rotation angle detection mechanisms so that high-precision detection can be always done even under normal magnetic field environments.

According to the present invention, there is provided a tandem rotation detector which includes a first rotation detection mechanism configured to generate a magnetic flux through a coil of a first outer core mounted inside a cylindrical housing for detecting the rotation angle of a rotary shaft arranged in the central portion of the housing. It also includes a second rotation detection mechanism which is placed side by side with the first rotation detection mechanism and configured to generate a magnetic flux through a coil of a second outer core mounted inside the housing for detecting the rotation angle of the rotary shaft. In this structure, the housing is formed from a nonmagnetic material.

Preferably, a shielding plate is provided between the first rotation detection mechanism and the second rotation detection mechanism.

Further, the rotary shaft may comprise two rotary shafts arranged in series. In this case, the first rotation detection mechanism and the second rotation detection mechanism detect the rotation angles of the two rotary shafts respectively.

On the other hand, the rotary shaft may comprise a single continuous rotary shaft. In this case, the first rotation detection mechanism and the second rotation detection mechanism detect a rotation angle difference to detect the rotational torque of the rotary shaft.

The tandem rotation detector of the present invention includes the first rotation detection mechanism configured to generate a magnetic flux through the coil of the first outer core provided inside the cylindrical housing for detecting the rotation angle of the rotary shaft arranged in the central portion of the housing, and the second rotation detection mechanism which is placed side by side with the first rotation detection mechanism and configured to generate a magnetic flux through the coil of the second outer core provided inside the housing for detecting the rotation angle of the rotary shaft. With this structure, since the housing is formed from a nonmagnetic material, the influence of leakage flux between the rotation angle detection mechanisms can be reduced, and hence high-precision detection can be always realized.

If the shielding plate is provided between the first rotation detection mechanism and the second rotation detection mechanism, the influence of the leakage flux between the rotation angle detection mechanisms can be further reduced.

Further, if the rotary shaft comprises two rotary shafts arranged in series, the first rotation detection mechanism and the second rotation detection mechanism can detect the rotation angles of the two rotary shafts respectively, thereby enabling high-precision detection of the two rotary shafts at all times.

On the other hand, if the rotary shaft comprises a single continuous rotary shaft, the first rotation detection mechanism and the second rotation detection mechanism can detect a rotation angle difference to detect the rotational torque of the rotary shaft, thereby enabling high-precision detection of the rotational torque at all times.
Fig. 1 is a sectional side view of a conventional tandem rotation detector;
Fig. 2 is a sectional side view of a tandem rotation detector according to an embodiment of the present invention;
Fig. 3A is a graph showing detection errors of rotation angles of rotary shafts detected by the conventional tandem rotation detector; and
Fig. 3B is a graph showing detection errors of rotation angles of rotary shafts detected by the tandem rotation detector according to the embodiment of the present invention.

A tandem rotation detector according to an embodiment of the present invention will now be described with reference to the accompanying drawings.

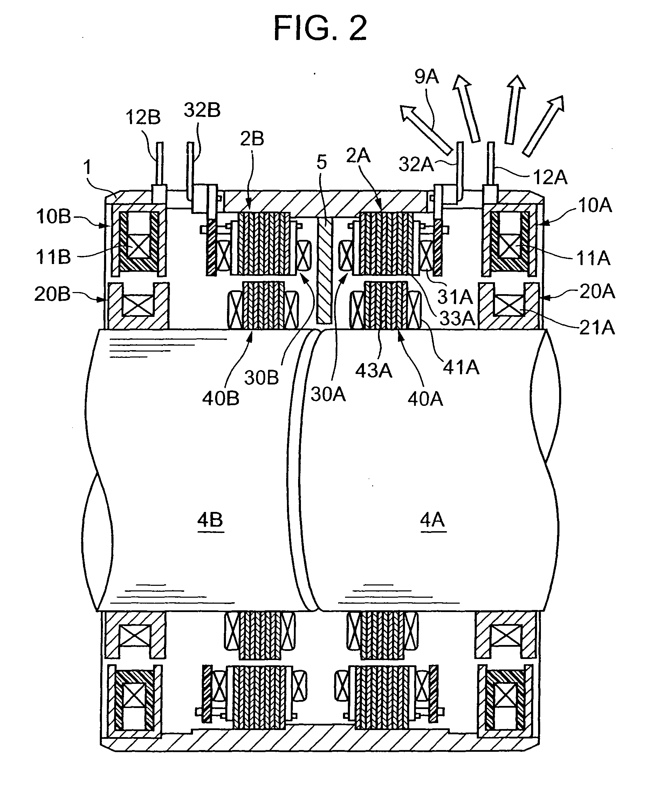

Fig. 2 is a sectional side view of a tandem rotation detector according to the embodiment of the present invention.

As shown in Fig. 2, a rotation detector according to the embodiment of the present invention has a rotary shaft 4A and a rotary shaft 4B arranged in series in a cylindrical housing 1. A first rotation angle detection mechanism 2A for detecting the rotation angle of the rotary shaft 4A, and a second rotation angle detection mechanism 2B for detecting the rotation angle of the rotary shaft 4B are provided inside the housing 1. In the first rotation angle detection mechanism 2A, a first outer core 10A and a first stator core 30A are arranged in parallel. A first inner core 20A is mounted on the rotary shaft 4A so as to face the first outer core 10A, and a first rotor core 40A is mounted on the rotary shaft 4A so as to face the first stator core 30A.

A coil 11A is wound on the first outer core 10A. The terminals of the coil 11A are connected to two outer core pins 12A which are placed side by side in the horizontal direction, respectively, through which an AC voltage is applied. A coil 21A is wound on the first inner core 20A.

Coils 31A are wound on a plurality of stator core teeth 33A provided around the first stator core 30A. The coils 31A have four terminals connected to each other in the X direction (horizontal direction) and the Y direction (vertical direction) respectively, and the four terminals of the coils 31A are connected to four stator core pins 32A which are placed side by side in the horizontal direction, respectively. Coils 41A are wound on a plurality of rotor core teeth 43A of the first rotor core 40A.

In the first rotation angle detection mechanism 2A, when an AC voltage is applied to the first outer core 10A, a voltage corresponding to a magnetic flux generated via the first inner core 20A is applied to the first rotor core 40A so that the first rotor core 40A and the first stator core 30A will be magnetically coupled. In other words, a voltage corresponding to the rotation angle of the rotary shaft 4A is induced into the first stator core 30A, thereby detecting the rotation angle of the rotary shaft 4A. Like the first rotation angle detection mechanism 2A, the second rotation angle detection mechanism 2B includes a second outer core 10B, a second inner core 20B, a second stator core 30B, and a second rotor core 40B to detect the rotation angle of the rotary shaft 4B. In addition, numeral 12B represents outer core pins to which the respective terminals of a coil 11B of the second outer core 10B are connected, while numeral 32B represents stator core pins to which the respective terminals of coils wound on the second stator core 30B are connected.

The tandem rotation detector according to the embodiment of the present invention detects the rotation angles of the rotary shafts 4A and 4B by applying an AC voltage to the coil 11A of the first outer core 10A and the coil 11B of the second outer core 10B. Since the housing is formed from a nonmagnetic material such as SUS303, no magnetic flux transmits to the outside of the housing 1, that is, no leakage flux is produced along the housing 1, thereby reducing the influence of leakage flux. When the tandem rotation detector according to the embodiment of the present invention is used in normal environments, the rotation angles can be detected without the ferromagnetic influence from the outside. Then, based on the detected rotation angles of the rotary shafts 4A and 4B, a difference between both rotation angles can be detected. So far as environmental noises have no frequency which is the same as or similar to a frequency of the AC voltage applied to the coil 11A of the first outer core 10A and the coil 11B of the second outer core 10B, the rotation detector will not be affected by the environmental noises.

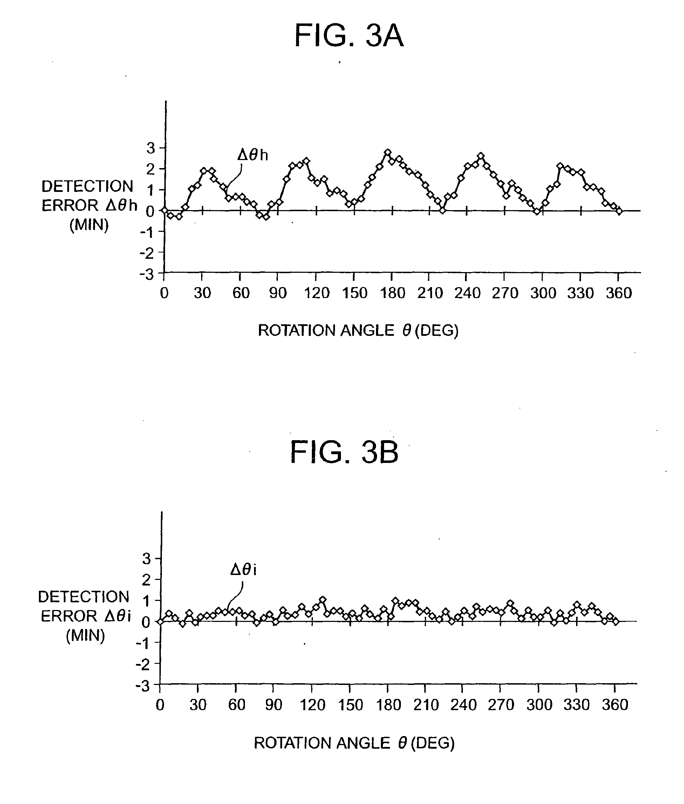

Fig. 3A shows detection error of the conventional tandem rotation detector, and Fig. 3B shows detection error of the tandem rotation detector according to the embodiment of the present invention.

The tandem rotation detector according to the embodiment of the present invention detects the rotation angles of the rotary shafts 4A and 4B (see Fig. 2) electrically through the first and second stator cores 30A and 30B, and a difference in rotation angle (deg) between the rotary shafts 4A and 4B is detected through the first and second stator cores 30A and 30B. The conventional tandem rotation detector also detects the rotation angles of the rotary shafts and a difference (deg) therebetween in the same manner.

Fig. 3A shows detection errors (min) versus mechanical rotation angle (deg) detected by one of the rotation angle detection mechanisms of the conventional tandem rotation detector, plotting the mechanical rotation angle (deg) on the abscissa and the detection error (arcmin) on the ordinate. Here, 1 minute is 1/60 of a degree. As shown in Fig. 3A, the conventional tandem rotation detector is affected by a leakage flux 109A (see Fig. 1), and hence detection error Δθh represents high values. The detection of the rotation angle is repeated for each angle corresponding to the set number of teeth for stator core teeth 133A of a first stator core 130A and that for rotor core teeth 142A of a first rotor core 140A shown in Fig. 1. Therefore, the detection error Δθh exhibits a periodic ridge pattern.

Fig. 3B shows detection errors (min) versus mechanical rotation angle (deg) detected by one of the rotation angle detection mechanisms of the tandem rotation detector according to the embodiment of the present invention, plotting the mechanical rotation angle (deg) on the abscissa and the detection error (min) on the ordinate. As shown in Fig. 3B, detection error Δθi represents very small values within one minute over all the angle range from 0 deg. to 360 deg. Like the conventional tandem rotation detector, although the tandem rotation detector according to the embodiment of the present invention repeats the detection of the rotation angle, since the detection error Δθi represents very small error values as a whole, the curve of distribution of detection errors becomes flatter with smaller error values than those of the conventional.

As it is apparent from Figs. 3A and 3B, since the tandem rotation detector according to the embodiment of the present invention reduces the influence of leakage flux, the detection error Δθi is very small values that are about a half of those of the detection error Δθh of the conventional tandem rotation detector, thus enabling high-precision detection at all times.

As described above, the tandem rotation detector according to the embodiment of the present invention reduces the influence of leakage flux between the rotation angle detection mechanisms under normal magnetic field environments, thereby enabling high-precision detection at all times.

The tandem rotation detector according to the embodiment of the present invention may be provided with a shielding plate 5 between the first rotation angle detection mechanism 2A and the second rotation angle detection mechanism 2B as shown in Fig. 2 so that the influence of leakage flux between the rotation angle detection mechanisms can be further reduced.

The tandem rotation detector according to the embodiment of the present invention has been described in connection with an embodiment for detecting the rotation angles of the rotary shafts 4A and 4B, but the present invention is not limited to such an embodiment. The present invention can be applied to an application in which a single rotary shaft is used instead of the rotary shafts 4A and 4B, and the two rotation angle detection mechanisms detect the torque of the single rotary shaft.

## Claims

1. A tandem rotation detector comprising:
a first rotation detection mechanism configured to generate a magnetic flux through a coil of a first outer core mounted inside a cylindrical housing for detecting the rotation angle of a rotary shaft arranged in the central portion of the housing; and
a second rotation detection mechanism, placed side by side with said first rotation detection mechanism configured to generate a magnetic flux through a coil of a second outer core mounted inside the housing for detecting the rotation angle of a rotary shaft,
wherein the housing is formed from a nonmagnetic material.

2. A tandem rotation detector according to claim 1, wherein a shielding plate is provided between said first rotation detection mechanism and said second rotation detection mechanism.

3. A tandem rotation detector according to claim 1 or 2, wherein the rotary shaft comprises two rotary shafts arranged in series, and said first rotation detection mechanism and said second rotation detection mechanism detect the rotation angles of the two rotary shafts respectively.

4. A tandem rotation detector according to claim 1 or 2, wherein the rotary shaft comprises a single continuous rotary shaft, and said first rotation detection mechanism and said second rotation detection mechanism detect a rotation angle difference to detect the rotational torque of the rotary shaft.
